# EUROPÄISCHE PATENTSCHRIFT

(11) **EP 1 674 783 B1**
(45) Veröffentlichungstag und Bekanntmachung des Hinweises auf die Patenterteilung: **18.05.2011**
(21) Anmeldenummer: 05024366.6
(22) Anmeldetag: 09.11.2005
(51) Int. Cl.: F16L 58/10, F16L 57/06

(54) **Brauserohrschutz**
Protector for a sprinkler pipe
Dispositif de protection d'un tuyau d'arroseur

(30) Priorität: 21.12.2004 DE 102004062672
(43) Veröffentlichungstag der Anmeldung: 28.06.2006
(73) Patentinhaber: Isenmann Siebe GmbH, D-76131 Karlsruhe (DE); Hein, Lehmann Trenn- und Fördertechnik GmbH, D-47805 Krefeld (DE)
(72) Erfinder: Sattler, Matthias, Dipl.-Ing., 64625 Bensheim (DE)
(74) Vertreter: COHAUSZ DAWIDOWICZ HANNIG & SOZIEN

(56) Entgegenhaltungen:
- DE-A1- 2 855 906
- GB-A- 1 483 634

## Beschreibung

Die Erfindung betrifft einen Brauserohrschutz für Bebrausungen in Siebmaschinen mit einem das Brauserohr insbesondere aus Stahl außen überdeckenden Mantel aus elastischem Material.

Es ist bekannt, ein Brauserohr einer Siebmaschine außen mit einer Schutzschicht aus Gummi zu versehen, die zum Beispiel durch Kabelbinder befestigt und gehalten ist. Ein solcher Brauserohrschutz ist einem erheblichen Abrieb ausgesetzt durch das von oben auf die Siebfläche fallende Siebmaterial. Hierdurch werden sowohl der Brauserohrschutz als auch die Befestigungsteile einem starken Verschleiß ausgesetzt, so dass der Schutzzeitraum verhältnismäßig gering ist. Darüber hinaus erfordert die Befestigung des Brauserohrschutzes zum Beispiel durch Kabelbinder einen zusätzlichen Arbeitsaufwand.

Aufgabe der Erfindung ist es, einen Brauserohrschutz der eingangs genannten Art so zu verbessern, dass er bei einfacher Befestigung einen sicheren Schutz über lange Zeit gewährt.

Diese Aufgabe wird erfindungsgemäß dadurch gelöst, dass das Material des Brauserohrschutzes Polyurethan ist.

Ein solcher Brauserohrschutz führt zu sehr hohen Standzeiten. Hierbei ist von Vorteil, wenn der Mantel die Form eines längsgeschlitzten Rohres aufweist. Ein besonders sicherer Halt bei einfacher Befestigung wird erreicht, wenn der Mantel unter Vorspannung auf dem Rohr befestigbar ist.

Besonders vorteilhaft ist es, wenn die Wanddicke des Mantels an der Oberseite des Brauserohres größer ist als in den übrigen Bereichen. Hierdurch wird die Standzeit noch erhöht, da die Stelle höchsten Verschleißes die größte Materialmenge bietet.

Von Vorteil ist, wenn an den den Längsschlitz bildenden Seitenrändern jeweils ein nach außen vorstehender leistenförmiger Rand als Abtropfkante angeformt ist. Damit wird der untere Bereich des Rohres, der von dem Brauserohrschutz nicht bedeckt ist, sicher geschützt, da die Abtropfkanten diesen Rohrbereich vom Siebmaterial fern halten.

Vorzugsweise wird vorgeschlagen, dass der Längsschlitz an der Unterseite des Brauserohres einen Längsbereich freilässt, in dem Stutzen für Brausedüsen des Brauserohres hindurchtreten. Auch kann der Brauserohrschutz das Rohr bis zu 360 Grad umschließen, wobei dann in mindestens einem der Schlitzseitenränder Ausnehmungen für die Brausedüsen insbesondere für die Stutzen der Brausedüsen angeordnet sind.

Ein Ausführungsbeispiel der Erfindung ist in der Zeichnung dargestellt und wird im folgenden näher beschrieben. Es zeigen
- Fig. 1: eine perspektivische Darstellung eines Abschnittes eines Brauserohres mit darüber liegendem Brauserohrschutz,
- Fig. 2: einen senkrechten Querschnitt durch das Brauserohr nach A-A in Fig. 3 und
- Fig. 3: eine Draufsicht auf den Brauserohrschutz.

Brauserohre 1 werden in der Regel aus Stahl gefertigt und oberhalb einer Siebfläche einer Siebmaschine angeordnet, um durch die an der Unterseite des Brauserohrs befestigten Brausedüsen 2 Wasser auf das Siebgut zu sprühen. Hierbei sind an der Unterseite des Brauserohrs 1 in gleichmäßigen Abständen Öffnungen 3 eingebracht, in denen nach unten ragende Stutzen 4 aus Metall eingeschweißt sind, in die von unten die Brausedüsen insbesondere aus Kunststoff eingeschoben oder eingeschraubt sind. Hierbei ist die Brausedüse 2 durch eine Mutter 8 an den Stutzen 4 insbesondere über ein Gewinde befestigt. Zusätzlich oder alternativ kann aber auch die Brausedüse 2 an ihrer Außenseite ein Gewinde 10 aufweisen, mit dem sie in ein Innengewinde des Stutzens 4 eingeschraubt ist. Seitlich jeder Brausedüse 2 ist ein gekrümmter Abweiser 5 angeformt, der das aus der Düse 2 austretende Wasser gleichmäßig über die Siebfläche verteilt.

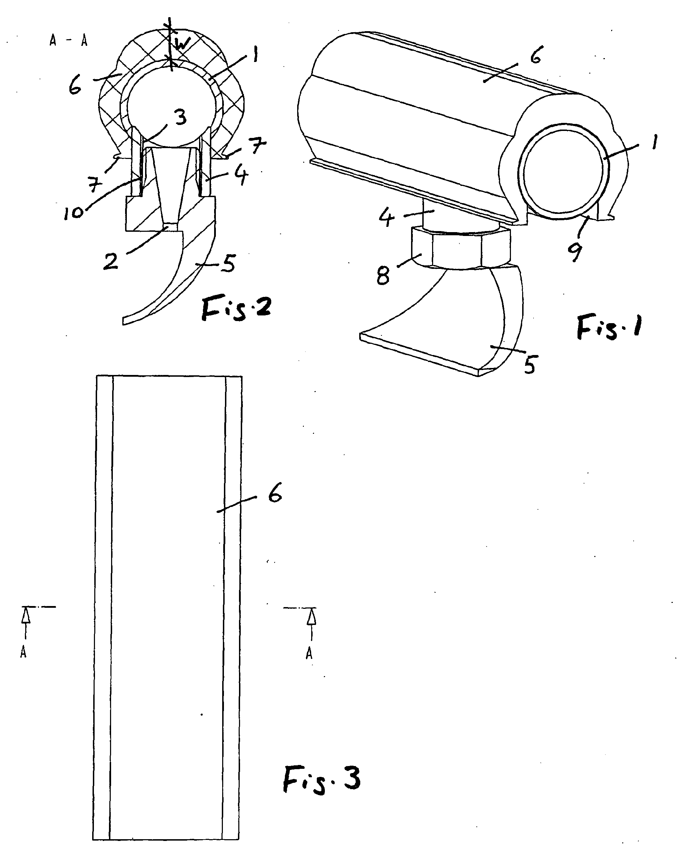

In dem in den Fig. 1 bis 3 dargestellten Ausführungsbeispiel ist über dem Brauserohr 1 ein mantelförmiger Brauserohrschutz 6 aus Polyurethan gestülpt, der die Form eines längs geschlitzten Rohres aufweist und damit im Querschnitt im wesentlichen die Form eines auf den Kopf gestellten U besitzt. Hierbei ist der Brauserohrschutz 6 als Mantel so geformt, dass er unter Vorspannung auf dem Rohr 1 sitzt und damit keiner zusätzlichen Befestigungsmittel bedarf. Damit weist der Innenraum des Brauserohrschutzes 6 im noch nicht befestigten Zustand einen Durchmesser auf, der kleiner ist als der Außendurchmesser des Rohres 1.

Die Wanddicke W des Brauserohrschutzes 6 bzw. des Schutzmantels weist im oberen Bereich eine größere Dicke auf als an den Seiten, so dass im oberen Bereich eine größere Kunststoffmenge zum Abrieb zur Verfügung steht. Ferner besitzen die unteren Schenkelenden des Brauserohrschutzes vorstehende leistenförmige Ränder 7 zu beiden Seiten, wodurch der Querschnitt des Brauserohrschutzes 6 einem Ω ähnelt. Diese Ränder 7 sorgen dafür, dass das Siebgut von dem Stutzen 4 und der Brausedüse 2 abgehalten wird.

Im dargestellten Ausführungsbeispiel bildet der untere Längsschlitz des Brauserohrschutzes 6 einen freien Längsbereich 9, durch den die Stutzen 4 mit den Brausedüsen 2 hindurchtreten. Alternativ kann aber auch der Brauserohrschutz 6 das Brauserohr 1 vollständig und damit um 360 Grad umschließen. Hierbei sind dann in den unteren Seitenrändern des Schlitzes des Brauserohrschutzes 6 Ausnehmungen in beiden oder zumindest in einem der beiden Ränder für die Stutzen und Düsen an der jeweiligen Stelle angeordnet.

## Patentansprüche

1. Brauserohrschutz für Bebrausungen in Siebmaschinen mit an der Unterseite des Brauserohrs angeordneten Brausedüsen und mit einem das Brauserohr (1) insbesondere aus Stahl außen überdeckenden Mantel (6) aus elastischem Material, **dadurch gekennzeichnet, dass** das Material aus Polyurethan ist.

2. Brauserohrschutz nach Anspruch 1, **dadurch gekennzeichnet, dass** der Mantel (6) die Form eines längsgeschlitzten Rohres aufweist.

3. Brauserohrschutz nach Anspruch 2, **dadurch gekennzeichnet, dass** der Mantel (6) unter Vorspannung auf dem Rohr befestigbar ist.

4. Brauserohrschutz nach einem der vorherigen Ansprüche, **dadurch gekennzeichnet, dass** die Wanddicke (W) des Mantels (6) an der Oberseite des Brauserohres (1) größer ist als in den übrigen Bereichen.

5. Brauserohrschutz nach einem der vorherigen Ansprüche, **dadurch gekennzeichnet, dass** an den den Längsschlitz bildenden Seitenrändern jeweils ein nach außen vorstehender leistenförmiger Rand (7) als Abtropfkante angeformt ist.

6. Brauserohrschutz nach einem der Ansprüche 2 bis 5, **dadurch gekennzeichnet, dass** der Längsschlitz an der Unterseite des Brauserohres einen Längsbereich (9) freilässt, in dem Stutzen (4) für Brausedüsen (2) des Brauserohres (1) hindurchtreten.

7. Brauserohrschutz nach einem der vorherigen Ansprüche, **dadurch gekennzeichnet, dass** in mindestens einem der Schlitzseitenränder Ausnehmungen für die Brausedüsen (2) insbesondere für die Stutzen (4) der Brausedüsen angeordnet sind.

## Claims

1. Protector for a sprinkler pipe for sprinkling in screening machines with sprinkler nozzles arranged on the underside of the sprinkler pipe and with a casing (6) made of elastic material covering the sprinkler pipe (1) particularly made of steel on the outside, **characterised in that** t the material is polyurethane.

2. Protector for a sprinkler pipe according claim 1, **characterised in that** the casing (6) is in the form of a pipe with longitudinal slits.

3. Protector for a sprinkler pipe according to according claim 2, **characterised in that** the casing (6) may be fastened to the pipe by pretensioning.

4. Protector for a sprinkler pipe according to one of the previous claims, **characterised in that** the wall thickness (W) of the casing (6) is greater on the top of the sprinkler pipe (1) than in the other areas.

5. Protector for a sprinkler pipe according to one of the previous claims, **characterised in that** on the side edges forming the longitudinal slit an edge (7) in the shape of a strip projecting outwards is formed as a drip edge.

6. Protector for a sprinkler pipe according to one of claims 2 to 5, **characterised in that** the longitudinal slit on the underside of the sprinkler pipe leaves open a longitudinal area (9), in which connections (4) for the sprinkler nozzles (2) of the sprinkler pipe (1) penetrate.

7. Protector for a sprinkler pipe according to one of the previous claims, **characterised in that** in at least one of the side edges of the slit recesses are arranged for the sprinkler nozzles (2) particularly for the connections (4) of the sprinkler nozzles.

## Revendications

1. Protection de tuyau d'arrosage pour des arrosages dans des tamiseuses, comprenant des buses d'arrosage disposées sur le dessous du tuyau d'arrosage et comprenant une enveloppe (6) en matériau élastique qui recouvre extérieurement le tuyau d'arrosage (1), en particulier en acier, **caractérisée en ce que** le matériau est en polyuréthanne.

2. Protection de tuyau d'arrosage selon la revendication 1, **caractérisée en ce que** l'enveloppe (6) présente la forme d'un tuyau fendu longitudinalement.

3. Protection de tuyau d'arrosage selon la revendication 2, **caractérisée en ce que** l'enveloppe (6) peut être fixée sous précontrainte sur le tuyau.

4. Protection de tuyau d'arrosage selon l'une des revendications précédentes, **caractérisée en ce que** l'épaisseur de paroi (W) de l'enveloppe (6) sur le dessus du tuyau d'arrosage (1) est plus grande que dans les zones restantes.

5. Protection de tuyau d'arrosage selon l'une des revendications précédentes, **caractérisée en ce que**, sur chacun des bords latéraux formant la fente longitudinale, est conformé un bord (7) en forme de nervure dépassant vers l'extérieur en tant qu'arête d'égouttage.

6. Protection de tuyau d'arrosage selon l'une des revendications 2 à 5, **caractérisée en ce que** la fente longitudinale laisse libre sur le dessous du tuyau d'arrosage une zone longitudinale (9) au travers de laquelle pénètrent des raccords (4) pour des buses d'arrosage (2) du tuyau d'arrosage.

7. Protection de tuyau d'arrosage selon l'une des revendications précédentes, **caractérisée en ce que** des évidements pour les buses d'arrosage (2), en particulier pour les raccords (4) des buses d'arrosage, sont disposés dans l'un au moins des bords latéraux de la fente.
